# EUROPÄISCHE PATENTSCHRIFT

(11) **EP 3 288 986 B1**
(45) Veröffentlichungstag und Bekanntmachung des Hinweises auf die Patenterteilung: **10.06.2020**
(21) Anmeldenummer: 16717624.7
(22) Anmeldetag: 19.04.2016
(51) Int. Cl.: C08F 210/02, C08F 218/08, C08F 220/28

(54) **ETHYLEN-COPOLYMERISATE MIT VERBESSERTEN TIEFTEMPERATUREIGENTSCHAFTEN UND GUTER ÖLBESTÄNDIGKEIT, DARAUS HERGESTELLTE VULKANISIERBARE MISCHUNGEN UND VULKANISATE**
ETHYLENE COPOLYMER EXHIBITING IMPROVED LOW TEMPERATURE AND VULCANIZABLE MIXTURES AND VULCANIZATES BASED THEREON
COPOLYMÈRE DE L'ÉTHYLÈNE À BASSE TEMPÉRATURE ET MÉLANGES VULCANISABLES ET VULCANISATS À BASE DE CEUX-CI

(30) Priorität: 30.04.2015 EP 15165823
(43) Veröffentlichungstag der Anmeldung: 07.03.2018
(73) Patentinhaber: ARLANXEO Deutschland GmbH, 41540 Dormagen (DE)
(72) Erfinder: LIEBER, Susanna, 67663 Kaiserslautern (DE); ISENBERG-SCHULZ, Olaf, 40764 Langenfeld (DE); FRENZEL, Ulrich, 41542 Dormagen (DE); KALKOFEN, Rainer, 51379 Leverkusen (DE)
(86) Internationale Anmeldenummer: PCT/EP2016/058657
(87) Internationale Veröffentlichungsnummer: WO 2016/173890

(56) Entgegenhaltungen:
- WO-A-80/02289
- NL-A- 7 906 502
- US-A- 4 323 666
- US-A1- 2013 131 261

## Beschreibung

Copolymerisate von Ethylen und Alkylcarbonsäurevinylestern, insbesondere Ethylen-Vinylacetat-Copolymerisate mit einem Vinylacetat (VA)-Gehalt von über 35 Gew.-%, sind großtechnisch hergestellte Kautschuke, aus denen, z.B. durch radikalische Vernetzung oder Vernetzung mittels elektromagnetischer Strahlung, Vulkanisate hergestellt werden können, die sich insbesondere durch gute Öl- und Medienbeständigkeit sowie exzellente Alterungsbeständigkeit auszeichnen.

Die derzeit auf dem Markt erhältlichen Ethylen-Vinylacetat-Kautschuke erfüllen allerdings die immer wichtiger werdende Anforderung einer guten Tieftemperaturflexibilität in Kombination mit einer niedrigen Ölquellung nur unzureichend, da eine Verbesserung der Ölbeständigkeit bisher nur bei gleichzeitiger Verschlechterung der Tieftemperaturflexibilität möglich war. Typischerweise besteht bei Ethylen-Vinylacetat-Kautschuken ein Zusammenhang zwischen VA-Gehalt, Glasübergangstemperatur und Ölquellung: Mit einem steigendem VA-Gehalt, d.h. erhöhter Polarität, verbessert sich die Ölquellung, gleichzeitig steigt jedoch die Glasübergangstemperatur stark an und umgekehrt. Versuche, durch Einbau von verschiedenen zusätzlichen Comonomeren eine Reduzierung der Glasübergangstemperatur bei gleichbleibender Ölquellung oder eine Reduktion der Ölquellung bei gleichbleibender Glasübergangstemperatur zu erreichen, führten in der Vergangenheit nicht zu ausreichenden Erfolgen.

In der Literatur sind verschiedene Ansätze zu Verbesserungen der Tieftemperatureigenschaften von Ethylen-Vinylacetat-Copolymeren beschrieben:
Der Einsatz von Weichmachern zur Verbesserung der Tieftemperatureigenschaften von EVM-Vulkanisaten ist weithin üblich (siehe z.B. Bayer "Handbuch für die Gummi-Industrie" 2. Auflage, S. 140 f). Allerdings sind insbesondere die im Hinblick auf eine Verbesserung der Tieftemperatureigenschaften wirksamsten Weichmacher, wie z.B. Dioctyladipat (DOA), Dioctylsebacat (DOS) oder Zitronensäurester wie z.B. Acetyltri(2-ethylhexyl)citrat oder Acetyltributylcitrat relativ flüchtig und führen daher häufig zu Problemen bei der Wärmealterung der Vulkanisate. Zudem ist die Menge des Weichmachers, der zugegeben werden kann, limitiert, da sonst die geforderte Härte bzw. sonstige gummitechnische Eigenschaften wie z.B. Reißdehnung und/oder Zugfestigkeit nicht mehr erreicht werden können. Probleme kann es zudem durch ein Ausschwitzen des Weichmachers, eine Migration des Weichmachers aus dem Gummi oder durch seine Extraktion geben. Eine Absenkung der Glastemperatur des verwendeten Kautschuks ist somit einem bloßen Weichmachereinsatz vorzuziehen: Der Mischungsentwickler bekommt zum einen mehr Flexibilität bei der Auswahl des Weichmachers und seiner Dosierung, oder er kann ggf. sogar völlig auf eine Zugabe desselben verzichten ohne Abstriche bei den Tieftemperatureigenschaften des Gummis oder der Wärmealterung machen zu müssen. Zum anderen kann durch eine Kombination des verbesserten Kautschuks mit niedrigerer Glastemperatur mit geeigneten Weichmachern der Einsatztemperaturbereich des Kautschuks bzw. des daraus hergestellten Gummis nochmals zusätzlich nach unten erweitert werden.

In EP0374666A1 wird unter anderem die Herstellung von Ethylen-Vinylacetat-Copolymerisaten mit verschiedenen Termonomeren, wie Glycidylmethacrylat, Methylacrylat, Acrylsäure oder 3-Methoxybutylacrylat mit angeblich erhöhter Beständigkeit gegen organische Lösemittel, Kraftstoffe und Öle und hoher Flexibilität auch bei tiefen Temperaturen beschrieben. Messdaten, die diese Eigenschaften belegen, fehlen vollständig. Im Falle des 3-Methoxybutylacrylats ist zudem völlig unklar, ob das eingesetzte Termonomer überhaupt während der Polymerisation umgesetzt und ins Polymer eingebaut wird, da für das erhaltene Polymer keinerlei Analysendaten angegeben werden. Die Polymere werden über ein in einer Kaskade kontinuierlich durchgeführtes Lösungspolymerisationsverfahren hergestellt, wobei die Gesamtmenge des Vinylacetats, Ethylens und des jeweiligen Termonomeren bereits beim Start der Polymerisationsreaktion in der Reaktionslösung vorliegt. Eine Nachdosierung einer oder mehrerer Komponenten ist nicht offenbart.

J.-F. Lutz et al. beschreiben z.B. in J. Polym. Sci., Polym. Chem. 2008, 46, 3459 und Macromolecules 2006, 39, 893 die Polymerisation von Polyethylenglycolmethacrylaten zur Synthese von Polymeren mit erhöhter, teilweise temperaturabhängiger Wasserlöslichkeit. Terpolymerisate der Polyethylenglycolmethacrylate mit Ethylen und Alkylcarbonsäurevinylestern sind nicht beschrieben.

JP 2014019805A offenbart die Umsetzung eines teilverseiften Ethylen-Vinylacetat-Copolymerisats mit einem Polyethylenglycolmonoethylether in Gegenwart von Diisocyanaten. Das Produkt wird zur Antistatischausrüstung von Kunststoffen verwendet.

US 4323666 offenbart Co-polymere von Vinyl acetat, Ethylen und Peroxy alkyl acrylat.

Die Aufgabe der vorliegenden Erfindung lag in der Bereitstellung von Copolymerisaten enthaltend Ethylen und Alkylcarbonsäurevinylester, welche die Nachteile des Standes der Technik vermeiden und gute Tieftemperatureigenschaften in Kombination mit einer hohen Ölbeständigkeit und einer geringen Wasserquellung, sowie guten Alterungseigenschaften aufweisen.

Die genannte Aufgabe wird gelöst durch Ethylen-Copolymerisate enthaltend
i) 10 bis 69 Gew.-%, vorzugsweise 15 bis 59 Gew.-% copolymerisiertes Ethylen,
ii) 30 bis 84 Gew.-%, vorzugsweise 35 bis 80 Gew.-% copolymerisierte Einheiten mindestens eines Alkylcarbonsäurevinylesters
   und
iii) 1 bis 50 Gew.-% Wiederholungseinheiten abgeleitet von mindestens einem Monomer der allgemeinen Formel (I)

   CH₂=C(R¹)(COO(R²O)ₙR³) (I)

   worin
   - R¹: für Wasserstoff oder Methyl,
   - R²: jeweils unabhängig voneinander für eine lineare oder verzweigte C₂ bis C₆-Alkylengruppe
   - R³: für Wasserstoff, unsubstituiertes oder mit C₁-C₃ Alkyl ein oder mehrfach substituiertes Phenyl, eine lineare oder verzweigte C₁-C₈Alkylgruppe oder -C(=O)R⁴,
   - R⁴: für Wasserstoff oder eine lineare oder verzweigte C₁-C₈ Alkylgruppe und
   - n: für eine Zahl von 2 bis 30
   steht,
wobei die Mengen jeweils bezogen sind auf die Summe der Monomeren i) bis iii).

Unter "Copolymeren" bzw. "Copolymerisaten" versteht der Fachmann Polymere die aus zwei oder mehr verschiedenartigen Monomereinheiten zusammengesetzt sind.

Die allgemeine Formel (I), CH₂=C(R¹)(COO(R²O)ₙR³), kann auch wie folgt als Strukturformel dargestellt werden:

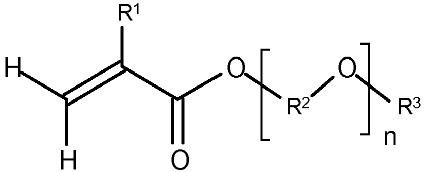

Als Alkylcarbonsäurevinylester eigenen sich bevorzugt solche, die sich von einer Alkylcarbonsäuregruppe mit 2 bis 13 C-Atomen, sowie von einer Vinylalkoholgruppe mit 2 bis 5 C-Atomen ableiten, insbesondere solche die ausgewählt sind aus der Gruppe enthaltend Vinylacetat, Vinylpropionat, Vinylbutyrat, Vinyllaurat, 1-Methylvinylacetat und Vinylestern von α-verzweigten Monocarbonsäuren mit 5 bis 13 C-Atomen (beispielsweise Vinylpivalat, VeoVa9™, VeoVa10™ oder VeoVa11™ der Firma Hexion), besonders bevorzugt Vinylacetat und Vinylpropionat und meist bevorzugt Vinylacetat. Diese Monomeren können einzeln oder in Kombination verwendet werden, wobei die einzelne Anwendung bevorzugt ist.

Die Monomere der allgemeinen Formel (I) weisen Reste R² auf, die unabhängig voneinander ausgewählt sind aus der Gruppe enthaltend Ethan-1,2-diyl, Propan-1,3-diyl, Propan-1,2-diyl, Butan-1,4-diyl, Butan-1,3-diyl, Pentan-1,3-diyl, Pentan-1,4-diyl, Pentan-1,5-diyl und 2-Methylbutan-1,4-diyl, vorzugsweise Ethan-1,2-diyl, Propan-1,3-diyl, Propan-1,2-diyl und Butan-1,4-diyl, besonders bevorzugt Ethan-1,2-diyl und Propan-1,2-diyl. Der Ausdruck "unabhängig voneinander" soll dabei verdeutlichen, dass verschiedene Reste R² in einem Molekül enthalten sein können. Die daraus resultierenden unterschiedlichen R²O Einheiten können in der Polyetherkette des Moleküls dabei beliebig statistisch, alternierend oder blockweise angeordnet sein.

Die Reste R³ der Monomere der allgemeinen Formel (I) sind ausgewählt aus der Gruppe bestehend aus H, CH₃, CH₂CH₃, CH₂CH₂CH₃, CH₂CH₂CH₂CH₃, CHO, COCH₃, COCH₂CH₃, COCH₂CH₂CH₃ und COCH₂CH₂CH₂CH₃, bevorzugt aus H, CH₃, CH₂CH₃ und COCH₃ und besonders bevorzugt aus CH₃, CH₂CH₃ und COCH₃. Als Monomere der allgemeinen Formel (I) können Mischungen von mehreren verschiedenen Monomeren der allgemeinen Formel (I) eingesetzt werden, die sich beispielsweise in den Resten R¹, R² und/oder R³ oder in der Zahl der Wiederholungseinheiten "n" unterscheiden.

Beispiele für Monomere der allgemeinen Formel (I) sind Polyethylenglycolacrylat, Polyethylenglycolmethacrylat, Polypropylenglycolacrylat, Polypropylenglycolmethacrylat, gemischtes Poly(ethylenglycolpropylenglycol)acrylat oder Poly(ethylenglycol-propylenglycol)methacrylat oder Poly(THF)acrylat oder Poly(THF)methacrylat. Besonders bevorzugt wird Methoxy- oder Ethoxy-terminiertes Polyethylenglycolacrylat bzw.-methacrylat, Methoxy- oder Ethoxy-terminiertes Polypropylenglycolacrylat bzw. -methacrylat mit 2 bis 25 Ethylenglycol- oder Propylenglycol-Wiederholungseinheiten, ganz besonders bevorzugt mit 2 bis 20 Ethylenglycol- oder Propylenglycol-Wiederholungseinheiten.

Verfahren zur Herstellung von Monomeren der allgemeinen Formel (I) sind dem Fachmann geläufig und in der einschlägigen Literatur beschrieben. Zudem ist eine Vielzahl solcher Verbindungen kommerziell erhältlich.

Der Gehalt an Wiederholungseinheiten abgeleitet von Monomeren der allgemeinen Formel (I) beträgt vorzugsweise 2 bis 40 Gew.-%, besonders bevorzugt 4 bis 25 Gew.-% und meist bevorzugt 6 bis 20 Gew.-%, jeweils bezogen auf die Summe der Monomeren i) bis iii).

Die erfindungsgemäßen Ethylen-Copolymerisate können weiterhin noch ein oder mehrere weitere copolymerisierte Monomere (iv), d.h. Copolymere die nicht unter die obige Definition der Monomere unter Ziffern i), ii) und iii) fallen, aufweisen und zwar in einer Gesamtmenge von weniger als 25 Gew.-%, bevorzugt weniger als 20 Gew.-%, weiter bevorzugt weniger als 15 Gew.-%, noch weiter bevorzugt weniger als 10 Gew.-%, besonders bevorzugt weniger als 5 Gew.-% und ganz besonders bevorzugt weniger als 1 Gew.-%, jeweils bezogen auf die Gesamtmenge der Monomere unter Ziffern i) bis (iv).

Diese weiteren Monomere (iv) werden typischerweise ausgewählt aus der Gruppe enthaltend C₁-C₈-Alkylacrylate, C₁-C₈-Alkylmethacrylate, epoxygruppenhaltige Acrylate, epoxygruppenhaltige Methacrylate, Maleinsäuremonoalkylester, Fumarsäuremonoalkylester, Vinylketone, vinylaromatische Verbindungen, konjugierte Diene, α-Monoolefine, Vinylmonomere mit einer Hydroxylgruppe, Chlorvinylacetat, Vinylidenfluorid, Hexafluorpropen, Vinylidenchlorid, Tetrafluorethylen, Tetrachlorethylen, Vinylchlorid, ungesättigte Amidmonomere, und Kohlenmonoxid, vorzugsweise aus Methylacrylat, Ethylacrylat, Propylacrylat, *n*-Butylacrylat, 2-Ethylhexylacrylat, *n*-Octylacrylat, Glycidylmethacrylat; Divinyladipat, Methylvinylketon, Ethylvinylketon, Styrol, α-Methylstyrol, Vinyltoluol, Butadien, Isopren, Propylen, 1-Buten, β-Hydroxyethylacrylat, 4-Hydroxybutylacrylat, 3-Cyanoethylacrylat, Acrylamid, N-Methylmethacrylamid und Kohlenmonoxid, ganz besonders bevorzugt aus Glycidylmethacrylat und Kohlenmonoxid.

Bei der meist bevorzugten Ausführungsform handelt es sich bei den erfindungsgemäßen Ethylen-Copolymerisaten um Copolymere von Ethylen, Vinylacetat und polyalkylenglycolhaltigen (Meth)acrylaten mit 2 bis 20 Ethylenglycol- und/oder Propylenglycol-Wiederholungseinheiten.

Bei den erfindungsgemäßen Ethylen-Copolymerisaten sind die Monomeren statistisch verteilt, alternierend oder blockweise, vorzugsweise statistisch verteilt angeordnet.

In einer bevorzugten Ausführungsform sind die erfindungsgemäßen Ethylen-Copolymerisate erhältlich durch ein Verfahren bei welchem nach dem Start der Polymerisationsreaktion Monomere der allgemeinen Formel (I) zur Reaktionsmischung zugegeben werden.

Die erfindungsgemäßen Ethylen-Copolymerisate besitzen üblicherweise Mooney-Viskositäten (ML (1+4) 100°C) ≥ 5 Mooney-Einheiten (MU), bevorzugt ≥ 10 Mooney-Einheiten, besonders bevorzugt ≥ 15 Mooney-Einheiten. Die Bestimmung der Werte für die Mooney-Viskosität (ML (1+4) 100°C) erfolgt mittels eines Scherscheibenviskosimeters nach ISO 289 (ISO 289-1:2014-02) bei 100 °C.

Die erfindungsgemäßen Ethylen-Copolymerisate besitzen typischerweise eine Polydispersität PDI = M_{w}/Mₙ, (wobei M_{w} das Gewichtsmittel und Mₙ das Zahlenmittel des Molekulargewichts darstellt) im Bereich von 2 bis 10, bevorzugt im Bereich von 2,5 bis 6.

Die erfindungsgemäßen Ethylen-Copolymerisate besitzen üblicherweise eine gewichtsmittlere Molmasse Mw im Bereich von von 30 kg/mol bis 500 kg/mol, bevorzugt von 40 kg/mol bis 450 kg/mol und ganz besonders bevorzugt von 50 kg/mol bis 340 kg/mol.

Die Glastemperaturen der erfindungsgemäßen Ethylen-Copolymerisate liegen typischerweise im Bereich von +10 °C bis -50 °C, vorzugsweise im Bereich von 0 °C bis -45 °C und besonders bevorzugt im Bereich von -5 °C bis -40 °C (gemessen mittels DSC mit einer Heizrate von 20 K/min).

Ein weiterer Gegenstand der Erfindung ist ein Verfahren zur Herstellung der erfindungsgemäßen Ethylen-Copolymerisate, in welchem Ethylen, Alkylcarbonsäurevinylester, Monomere der allgemeinen Formel (I) und ggf. ein oder mehrere weitere Monomere (iv) radikalisch polymerisiert werden.

In einer bevorzugten Ausführungsform wird das Verfahren zur Herstellung der erfindungsgemäßen Ethylen-Copolymerisate derart durchgeführt, dass nach dem Start der Polymerisationsreaktion Monomere der allgemeinen Formel (I) zur Reaktionsmischung zugegeben werden. Die Reaktionsmischung kann bereits beim Start der Polymerisationsreaktion einen Teil der insgesamt eingesetzten Menge an Monomeren der allgemeinen Formel (I) enthalten oder es können sämtliche Monomere der allgemeinen Formel (I) erst nach dem Start der Polymerisationsreaktion zudosiert werden. Typischerweise enthält die Reaktionslösung beim Start der Polymerisation bis zu 50 %, bevorzugt bis zu 33 %, besonders bevorzugt bis zu 25 %, ganz besonders bevorzugt bis zu 20 %, und meist bevorzugt 1 bis 15 % Monomere der allgemeinen Formel (I), jeweils bezogen auf die Gesamtmenge an Monomeren der allgemeinen Formel (I).

Das Verfahren wird dabei typischerweise als Batchverfahren z.B. in einem Rührkessel oder als kontinuierliches Verfahren z.B. in einer Kesselkaskade oder einem Rohrreaktor durchgeführt. Die Zugabe von Monomeren der allgemeinen Formel (I) nach dem Start ist bei einem Batch-Prozess so zu verstehen, dass nach dem erfolgten Reaktionsstart eine Zugabe in ein oder mehreren, vorzugsweise mehreren Portionen oder eine kontinuierliche Zugabe von Monomeren der allgemeinen Formel (I) zur Reaktionsmischung erfolgt, wohingegen bei einem kontinuierlichen Verfahren die Zugabe der Monomere der allgemeinen Formel (I) zur Reaktionsmischung an mindestens einer, vorzugsweise an mehreren Stellen erfolgt, welche sich stromabwärts von der Stelle des Reaktionsstarts befindet bzw. befinden.

In einer bevorzugten Ausführungsform enthält die Reaktionslösung zu Beginn der Polymerisationsreaktion:
a) 1 bis 69 Gew.-%, bevorzugt 15 bis 59 Gew.-%, Ethylen,
b) 30 bis 84 Gew.-%, bevorzugt 40 bis 80 Gew.-% Vinylacetat und
c) 0 bis 30 Gew.-% Monomer der allgemeinen Formel (I), wobei R¹ für Wasserstoff oder Methyl, R² jeweils unabhängig voneinander für eine lineare oder verzweigte C₂ - C₄-Alkylengruppe, R³ für Wasserstoff, eine lineare oder verzweigte C₁-C₈ Alkylgruppe oder -C(=O)R⁴, R⁴ für Wasserstoff oder eine lineare oder verzweigte C₁-C₈ Alkylgruppe und n für eine Zahl von 2 bis 30 steht,
jeweils bezogen auf die Summe der Komponenten a) + b) + c).

Bevorzugt enthält die Reaktionslösung weiterhin 20 bis 60 Gew.-% (bezogen auf die Gesamtmasse der Reaktionslösung) eines polaren organischen Lösungsmittels, bevorzugt eines alkoholischen Lösungsmittels mit einem bis 4 C Atomen, besonders bevorzugt *tert.-*Butanol.

Die Polymerisation kann dabei mittels eines radikalisch zerfallenden Polymerisationsinitiators, dessen Anteil bezogen auf die Summe von Komponenten a) + b) üblicherweise 0,001 bis 1,5 Gew.-% beträgt, beispielsweise peroxidgruppenhaltigen oder Azogruppen enthaltenden Verbindungen oder durch Einwirkung elektromagnetischer Strahlung gestartet werden.

Falls nach dem Start der Polymerisiationsreaktion Monomere der allgemeinen Formel (I) zugegeben werden kann dies sowohl in Substanz oder auch als Mischung mit dem Vinylester-Monomeren und/oder mit dem verwendeten Reaktionslösungsmittels erfolgen. Letztgenannte Mischung wird nachstehend auch als Funktionalisierungslösung bezeichnet.

Bevorzugt erfolgt die Zudosierung in Form einer Mischung von
d) 0 bis 95 Gew.-% Alkylcarbonsäurevinylesters und
e) 5 bis 100 Gew.-% Monomere der allgemeinen Formel (I)
jeweils bezogen auf die Summe der Komponenten d) + e), sowie

0 - 60 Gew.-% eines polaren organischen Lösungsmittels mit einem bis 4 C Atomen, besonders bevorzugt tert.-Butanol, bezogen auf die Summe der Komponenten d) + e) sowie des polaren organischen Lösungsmittels, wobei zumindest Alkylcarbonsäurevinylester oder polares organischen Lösungsmittel in der Mischung enthalten ist.

Die Zugabe einer Alkylcarbonsäurevinylester-haltigen Funktionalisierungslösung hat gegenüber der getrennten Zugabe oder der Zugabe in Substanz den Vorteil, dass die Mischung über einen weiten Temperaturbereich flüssig ist und gut pumpfähig bleibt und daher im allgemeinen keine Beheizung der Lagerbehälter und Leitungen nötig ist.

Bevorzugt erfolgt die Zudosierung der Funktionalisierungslösung bei Batchpolymerisationen kontinuierlich.

Die Polymerisation wird besonders bevorzugt kontinuierlich in einer Reaktorkaskade durchgeführt. Dabei erfolgt eine Zudosierung der Funktionalisierungslösung typischerweise in mindestens einem, vorzugsweise in mehreren, dem Reaktor, in dem die Polymerisation gestartet wird, nachstehenden Reaktoren, typischerweise bei einer Reaktortemperatur im Bereich von 35 °C bis 110 °C. Im Falle der Verfahrensdurchführung in einem Rohrreaktor erfolgt die Zugabe an mindestens einer Stelle stromabwärts zu derjenigen Stelle, an der die Reaktion gestartet wird.

Die erfindungsgemäße Zudosierung der Funktionalisierungslösung führt zu einer höheren chemischen Einheitlichkeit der erfindungsgemäßen Ethylen-Copolymerisate und somit zu besseren Eigenschaften, wie z.B. einer noch niedrigeren Glasübergangstemperatur.

Bevorzugt wird das Verfahren zur Herstellung der erfindungsgemäßen Ethylen-Copolymerisate als Lösungspolymerisation bei Temperaturen >35 °C, besonders bevorzugt >40 °C, ganz besonders bevorzugt bei >45 °C durchgeführt. Üblicherweise erfolgt die Polymerisation bei Drücken von 150 bis 500 bar, bevorzugt 250 bis 450 bar. Die mittlere Verweilzeit liegt typischerweise im Bereich von 0,5 bis 12 Stunden.

Vorzugsweise werden als Polymerisationsinitiator Peroxydicarbonate, Peroxyester, Hydroperoxide, Peroxide oder Azoverbindungen wie 2,2'-Azobis(2,4-dimethylvaleronitril) (ADVN), 2,2'-Azoisobuytronitril (AIBN), 2,2'-Azobis(4-methoxy-2,4-dimethylvaleronitiril), 2,2'-Azobis(2-methylbutyronitril), 1,1'-Azobis(cyclohexane-1-carbonitril), Dimethyl-2,2'-azobis(2-methylpropionat), 2,2'-Azobis[N-(2-propenyl)-2-methylpropionamide], 1-[(1-cyano-1-methylethyl)azo]-formamid, 2,2'-Azobis(N-butyl-2-methylpropionamide), 2,2'-Azobis(N-cyclohexyl-2-methylpropionamid), 2,2'-Azobis[2-(2-imidazolin-2-yl)propane]dihydrochlorid, 2,2'-Azobis[2-(2-imidazolin-2-yl)propan]disulfatdihydrat, 2,2'-Azobis(2-methylpropion-amidine)dihydrochlorid, 2,2'-Azobis[N-(2-carboxyethyl)-2-methylpropionamidin]-hydrat, 2,2'-Azobis{2-[1-(2-hydroxyethyl)-2-imidazolin-2-yl]propane}dihydrochlorid, 2,2'-Azobis[2-(2-imidazolin-2-yl)propan], 2,2'-Azobis(1 -imino-1 -pyrrolidino-2-ethylpropan)dihydrochlorid, 2,2'-Azobis{2-methyl-N-[1,1-bis(hydroxymethyl)-2-hydroxyethyl]propionamid}, 2,2'-Azobis[2-methyl-N-(2-hydroxyethyl)propionamid], Acetylcyclohexansulfonylperoxid, Bis(4-tert-Butylcyclohexyl)peroxydicarbonat und Bis(2-ethylhexyl)peroxydicarbonat eingesetzt. Besonders bevorzugt werden als Polymerisationinitiator 2,2'-Azobis(2,4-dimethylvaleronitril) (ADVN), 2,2'-Azoisobutyro-nitril (AIBN), 2,2'-Azobis(4-methoxy-2,4-dimethylvaleronitiril) oder Di(4-tert-butylcyclohexyl) peroxydicarbonat eingesetzt.

Die vorliegende Erfindung betrifft auch vulkanisierbare Mischungen enthaltend erfindungsgemäße Ethylen-Copolymerisate mit einem oder mehreren Vernetzern und/oder anderen Additiven. Vernetzer sind nicht erforderlich beispielsweise für Zusammensetzungen die mittels Strahlenvernetzung vulkanisiert werden.

Als Vernetzer kommen beispielsweise peroxidische Vernetzer in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcyclohexan, tert-Butylperbenzoat, 2,2 Bis(t-butylperoxy)buten, 4,4-di-tert-Butylperoxynonylvalerat, Dicumylperoxid, 2,5-Dimethyl-2,5-di(t-butylperoxy)hexan, tert-Butylcumylperoxid, 1,3-Bis(t-butylperoxyisopropyl)benzol, Di-t-butylperoxid und 2,5-Dimethyl-2,5-di(t-butylperoxy)-hexyn-3. Die Gesamtmenge des oder der Vernetzer liegt üblicherweise im Bereich von 0,5 bis 15 phr, bevorzugt im Bereich von 1 bis 10 phr und besonders bevorzugt im Bereich von 1,5 bis 6 phr, bezogen auf die erfindungsgemäßen Ethylen-Copolymerisate. Dabei können bevorzugt geträgerte Peroxide verwendet werden, wobei die angegebenen Mengen um die Menge des Trägers korrigiert werden müssen.

Es kann vorteilhaft sein, neben diesen peroxidischen Vernetzern weitere Zusätze, sogenannte Coagentien, zu verwenden, mit deren Hilfe die Vernetzungsausbeute erhöht werden kann: Hierfür sind beispielsweise Triallylisocyanurat, Triallylcyanurat, Trimethylolpropantrimethacrylat, Triallyltrimellitat, Ethylenglycoldimethacrylat, Butandioldimethacrylat, Trimethylolpropantriacrylat, Zinkdiacrylat, Zinkdimethacrylat, 1,2-Polybutadien oder N,N'-m-Phenylendimaleinimid geeignet. Die Gesamtmenge des oder der Coagentien liegt üblicherweise im Bereich von 0,2 bis 10 phr, bevorzugt 0,4 bis 4 phr, besonders bevorzugt 0,6 bis 2 phr bezogen auf die erfindungsgemäßen Ethylen-Copolymerisate. Auch hier können geträgerte Verbindungen eingesetzt werden, wobei die angegebenen Mengen um die Masse des Trägers korrigiert werden müssen. An Stelle einer peroxidischen Vernetzung kann im Falle von Epoxyfunktionalitäten enthaltenden erfindungsgemäßen Ethylen-Copolymerisaten, wie sie beispielsweise durch Verwendung von Glycidylmethacrylat als zusätzliches Monomer eingeführt werden können, eine Vernetzung auch durch Zugabe einer Polysäure oder eines Polysäureanhydrides oder Diaminen und geeigneter Beschleuniger durchgeführt werden. Als Polysäure kann z.B. Glutarsäure oder Adipinsäure und als Beschleuniger Tetrabutylammoniumbromid verwendet werden.

Alternativ zu diesen Vernetzungsarten ist, wie erwähnt, auch eine Vernetzung der erfindungsgemäßen Copolymerisate mit Hilfe von energiereichen Strahlen, z.B. Beta- oder Gammastrahlen möglich, wobei auch in diesem Fall die oben erwähnten Coagentien zur Verbesserung der Vernetzungsausbeute eingesetzt werden können.

Optional können derartige vulkanisierbare Mischungen auch noch ein oder mehrere dem Fachmann für Kautschuke geläufige Additive und Faserstoffe enthalten. Diese umfassen z.B. Füllstoffe, Weichmacher, Alterungsschutzmittel, Lichtschutzmittel, Verarbeitungshilfsmittel, Tackifier, Treibmittel, Farbstoffe, Pigmente, Wachse, Harze, organische Säuren und/oder deren Salze, Vulkanisationsverzögerer, Metalloxide, Fasern, sowie Füllstoffaktivatoren oder andere Additive, die in der Gummiindustrie bekannt sind (siehe z.B. Ullmann's Encyclopedia of Industrial Chemistry, VCH Verlagsgesellschaft mbH, D-69451 Weinheim, 1993, Vol. A 23 "Chemicals and Additives", S. 366-417 oder Bayer AG "Manual for the Rubber Industry" 2. fully revised edition, 1993).

Die erfindungsgemäßen vulkanisierbaren Zusammensetzungen können so vorzugsweise auch noch einen oder mehrere Füllstoffe enthalten wie z.B. Ruß, Talkum, Silica, Calciumcarbonat und (calciniertes) Kaolin, (calcinierte) Aluminiumsilikate, besonders bevorzugt Ruß, Silica, calcinierte Aluminiumsilikate, und/oder calciniertes Kaolin.

Die erfindungsgemäßen vulkanisierbaren Zusammensetzungen können auch noch einen oder mehrere Weichmacher, wie z.B. Dioctylsebacat, Dioctyladipat, Phosphorsäureester, TOTM enthalten.

Als Füllstoffaktivatoren kommen z.B. organische Silane, wie Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyl-trimethoxysilan, Methyltrimethoxy-silan, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan, (Octadecyl)methyl-dimethoxysilan und epoxygruppenhaltige Silane, wie z.B. 3-Glycidoxypropyltrimethoxysilan oder 3-Glycidoxypropyltriethoxysilan, in Betracht. Weitere Füllstoffaktivatoren stellen zum Beispiel grenzflächenaktive Substanzen wie Triethanolamin, Trimethylolpropan, Hexantriol und Polyethylenglycole mit Molekulargewichten von 74 bis 10 000 g/mol dar. Die Menge an Füllstoffmodifikatoren beträgt üblicherweise 0 bis 10 Gew.-Teile, bezogen auf 100 Gew.-Teile des erfindungsgemäßen Ethylen-Copolymerisates.

Als Antioxidantien können den vulkanisierbaren Zusammensetzungen alle dem Fachmann bekannten zugesetzt werden, die üblicherweise in Mengen von 0 bis 5 Gew.-Teile, bevorzugt 0,5 bis 3 Gew.-Teile, bezogen auf 100 Gew.-Teile der erfindungsgemäßen Ethylen-Copolymerisate eingesetzt werden. Bevorzugt werden CDPA und TMQ eingesetzt.

Als weitere Alterungsschutzmittel können Säurefänger, wie z.B. Calciumoxid, Magnesiumoxid, Magnesiumcarbonat, Zinkoxid, Zinkcarbonat, Bleioxid, Natriumcarbonat oder Lithiumcarbonat in Dosierungen bis 10 phr, bevorzugt bis 5 phr eingesetzt werden. Ganz besonders bevorzugt werden Calciumoxid, Magnesiumoxid oder Lithiumcarbonat in Dosierungen bis 5 phr eingesetzt. Auch eine Verwendung von Carbodiimiden, insbesondere polymeren Carbodiimiden wie z.B. Stabaxol® P, in Mengen bis 10 phr, bevorzugt bis 5 phr, besonders bevorzugt bis 2 phr ist möglich. Eine Kombination verschiedener dieser Säurefänger ist ebenfalls möglich und bevorzugt.

Als Verarbeitungshilfsmittel und/oder Formtrennmittel kommen z.B. gesättigte oder teilweise ungesättigte Fett- und Ölsäuren und deren Derivate (Fettsäureester, Fettsäuresalze, Fettalkohole, Fettsäureamide) in Betracht. Außerdem können Ozonschutzwachse (Handelsname z.B. Antilux®) in geringen Dosierungen als Verarbeitungshilfsmittel eingesetzt werden. Diese Mittel werden in Mengen von 0 bis 10 Gew.-Teile, bevorzugt 0 bis 2 Gew.-Teile, besonders bevorzugt 0 bis 1 Teil bezogen auf 100 Gew.-Teile des erfindungsgemäßen Copolymerisats eingesetzt. Zur weiteren Verbesserung der Entformbarkeit können zudem auf die Formoberfläche applizierbare Produkte, wie z.B. Produkte auf Basis von niedermolekularen Silikonverbindungen, Produkte auf Basis von Fluorpolymeren sowie Produkte auf Basis von Phenolharzen eingesetzt werden.

Als Treibmittel zur Herstellung von geschäumten Produkten kann z.B. OBSH oder ADC eingesetzt werden.

Auch die Verstärkung mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukte.

Die erfindungsgemäße, vulkanisierbare Zusammensetzung wird vorzugsweise hergestellt, indem man erfindungsgemäße Ethylen-Copolymerisate mit dem Vernetzter, ggf. einem oder mehreren Coagentien und ggf. weiteren Chemikalien und Zuschlagstoffen, die gemeinhin in der Kautschukindustrie eingesetzt werden, wie z.B. den oben genannten mit Hilfe eines üblichen Mischaggregates, z.B. eines Walzwerks oder eines Innenmischers, mischt. Dabei können sowohl ein- als auch mehrstufige Mischverfahren angewendet werden.

Beispielhaft sind nachfolgend zwei Varianten dargestellt, wie die Erfindung ausgeführt werden kann:

### Verfahren A: Herstellung im Innenmischer

Zum Startzeitpunkt erfolgt die Beschickung des Innenmischers (bevorzugt ein Innenmischer mit sogenannter "ineinandergreifender" Rotorgeometrie) mit den erfindungsgemäßen Ethylen-Copolymerisaten und es kommt zur Zerkleinerung des Materials. Nach einem geeigneten Mischzeitraum erfolgt die Zugabe der Füllstoffe und Additive. Das Mischen erfolgt unter Kontrolle der Temperatur mit der Maßgabe, daß das Mischgut für eine geeignete Zeit bei einer Temperatur im Bereich von 80 bis 150 °C verbleibt. Nach einem weiteren geeigneten Mischzeitraum erfolgt die Zugabe der weiteren Mischungsbestandteile wie optional Stearinsäure, Coagentien, Antioxidantien, Weichmacher, Weißpigmente (beispielsweise Titandioxid), Farbstoffe und sonstige Verarbeitungswirkstoffe. Nach einem weiteren geeigneten Mischzeitraum wird der Innenmischer gelüftet und der Schacht gereinigt. Nach einem weiteren geeigneten Zeitraum wird der Vernetzter zugegeben. Dabei ist die Mischungstemperatur sorgfältig zu kontrollieren um eine Anvulkanisation im Mischer zu verhindern. Ggf. muss die Drehzahl des Rotors verringert werden um die Mischungstemperatur abzusenken. Nach einem weiteren geeigneten Zeitraum wird der Innenmischer unter Erhalt der vulkanisierbaren Mischung entleert. Unter geeigneten Zeiträumen sind einige Sekunden bis einige Minuten zu verstehen. Die so hergestellten vulkanisierbaren Mischungen können in üblicher Weise, etwa durch die Mooney-Viskosität, durch Mooney-Scorch oder durch einen Rheometertest beurteilt werden. Alternativ kann die Mischung ohne Zugabe des Vernetzers ausgeworfen werden und der Vernetzer auf einem Walzwerk eingemischt werden.

### Verfahren B: Herstellung auf der Walze

Die Reihenfolge bei der Zudosierung kann in analoger Weise zu obigem Verfahren A erfolgen. Die Vulkanisation der erfindungsgemäßen Ethylen-Copolymerisate bzw. der diese enthaltenden vulkanisierbaren Zusammensetzungen erfolgt typischerweise bei einer Temperatur im Bereich von 100 bis 250 °C, vorzugsweise 140 bis 220 °C, besonders bevorzugt von 160 bis 200 °C. Bei Bedarf kann im Anschluss an die Vulkanisation eine Temperung bei einer Temperatur von etwa 150 bis 200 °C während 1 bis 24 Stunden durchgeführt werden um die Endprodukteigenschaften zu verbessern.

Gegenstand der Erfindung sind auch die durch Vulkanisation der erfindungsgemäßen Ethylen-Copolymerisate bzw. diese enthaltende Mischungen erhältlichen Vulkanisate. Diese zeigen sehr gute Werte im Druckverformungstest bei Raumtemperatur und 150°C, hohe Zugspannungen und gute Bruchdehnungen, sowie eine sehr gute Kombination aus niedriger Ölquellung und niedriger Glasübergangstemperatur.

Die erfindungsgemäßen Ethylen-Copolymerisate, bzw. daraus hergestellten vulkanisierbaren Mischungen und/oder Vulkanisate können zur Herstellung von ungeschäumten oder geschäumten Formteilen, sowie zur Herstellung von Folien und Überzügen aller Art verwendet werden, insbesondere zur Herstellung von Kabelleitlagen, Kabelmänteln, Dichtungen, Transportbändern, Faltenbälgen, Schläuchen, Zylinderkopfdeckeldichtungen und O-Ringen. Die erfindungsgemäßen Vulkanisate können zudem in Kunststoffe gemischt werden, wo sie als nichtflüchtiges Antistatikum dienen. Daher ist auch die Verwendung der erfindungsgemäßen Ethylen-Copolymerisate zur Antistatischausrüstung von Polymeren ein weiterer Gegenstand der Erfindung.

Zudem können die erfindungsgemäßen Ethylen-Copolymerisaten als elastomere Phase in thermoplastischen Vulkanisaten verwendet werden, sowie als Blendkomponente in Kunststoffen oder Kautschuken, vorzugsweise PVC, Polyamid, Polyester und/oder HNBR.

Weitere Einsatzmöglichkeiten bestehen in der Verwendung von erfindungsgemäßen Ethylen-Copolymerisaten als nicht-flüchtigen Weichmachern und/oder Schlagzähmodifizierern in Kunststoffen, vorzugsweise PVC, Polyamid und/oder Polyester.

Ein wesentlicher Vorteil der Erfindung liegt darin, dass die erfindungsgemäßen Vulkanisate eine geringere Glastemperatur bei gleicher Ölbeständigkeit aufweisen als konventionelle Typen mit gleichem Vinylestergehalt. Zudem ist überraschenderweise die Wasserquellung gegenüber Standard-EVM bei Verwendung von Ruß als Füllstoff nicht erhöht.

Beispiele:

### Messmethoden:

Die Bestimmung der Glasübergangstemperatur (Tg) erfolgt mittels dynamischer Differenzkalorimetrie (engl.: Differential Scanning Calorimetry - DSC) nach EN ISO 11357-1:2009 und EN ISO 11357-2:2014, als Inertgas wird Helium verwendet, die Glasübergangstemperatur wird nach dem Wendepunktverfahren bestimmt. Die Temperaturabtastrate beträgt im Falle der Copolymerisate 20K/min, im Falle der Vulkanisate 10K/min.

Die Bestimmung der Zusammensetzung der Copolymerisate erfolgte mittels ¹H NMR (Gerät: Bruker DPX400 mit Software XWIN-NMR 3.1, Messfrequenz 400 MHz).

Die Gelpermeationschromotographie (GPC) wurde gemäß DIN 55672-1, Gelpermeationschromotographie (GPC) Teil 1: Tetrahydrofuran (THF) als Eluationsmittel, mit einem Zusatz von 0,5 Gew.-% Triethylamin durchgeführt. Als Standard diente Polystyrol.

Die Bestimmung der Werte für die Mooney-Viskosität (ML (1+4)100°C) erfolgt jeweils mittels eines Scherscheibenviskosimeters gem. ISO 289 bei 100 °C.

Die Platten für die Bestimmung der mechanischen Eigenschaften wurden in einer Vulkanisierpresse der Firma Werner & Pfleiderer zwischen Teflon-Folien unter den angegebenen Bedingungen vulkanisiert.

Die Härte nach Shore A wurde nach ASTM-D2240-81 gemessen.

Die Zugversuche zur Bestimmung der Spannung in Abhängigkeit von der Deformation wurden nach DIN 53504 bzw. ASTM D412-80 durchgeführt.

Die Heißluftalterung erfolgte nach DIN 53508 / 2000. Es wurde das Verfahren 4.1.1 "Lagerung im Wärmeschrank mit zwangsläufiger Durchlüftung" angewandt.

Die Öl- und Wasserlagerung erfolgte nach DIN ISO 1817.

### Mit Handelsnamen bezeichnete Substanzen:

- Perkadox® 16: Di(4-tert-butylcyclohexyl)peroxydicarbonat der AkzoNobel Functional Chemicals
- VAZO52®: 2,2'-Azobis-(2,4-dimethylvaleronitril) der E.I. du Pont de Nemours and Company
- Levapren® 500: Ethylen-Vinylacetat-Copolymer (VA-Gehalt 50 %, Ethylengehalt 50 %) der Lanxess Deutschland GmbH
- Levapren® 600: Ethylen-Vinylacetat-Copolymer (VA-Gehalt 60 %, Ethylengehalt 40 %) der Lanxess Deutschland GmbH
- Levapren® 700: Ethylen-Vinylacetat-Copolymer (VA-Gehalt 70 %, Ethylengehalt 30 %) der Lanxess Deutschland GmbH
- SR550: Methoxypolyethylenglycolmethacrylat (M_{w} der PEG-Einheit 350), der Sartomers Europe
- SR552: Methoxypolyethylenglycolmethacrylat (M_{w} der PEG-Einheit 550), der Sartomer Europe
- Bisomer® PPA6: Hydroxyl-terminiertes Polypropylenglycolmonoacrylat, der GEO Specialty Chemicals, Inc
- Ethyltriglycolmethacrylat: Handelsprodukt der Evonik Röhm GmbH > 97 %
- Methoxyethylmethacrylat: Handelsprodukt der TCI Deutschland GmbH
- Rhenopren® EPS: Weißfaktis (Schwefel- und chlorfrei vernetzte pflanzliche Öle) der Rheinchemie Rheinau GmbH
- Antilux® 110: Paraffinwachs der Rheinchemie Rheinau GmbH
- Rhenofit® TAC/S: Triallylcyanurat 70 % auf 30 % Kieselsäure der Rheinchemie Rheinau GmbH
- Rhenofit® DDA: Alterungsschutzmittel (Diphenylaminderivat) der Rheinchemie Rheinau GmbH
- Perkadox® 14-40 B-PD: Geträgertes Di-(tert-butylperoxyisopropyl)benzol der AkzoNobel N.V.
- Corax® N550/30: Ruß der Orion Engineered Carbons GmbH
- Stabaxol® P: Polycarbodiimid der Rhein Chemie Rheinau GmbH
- Maglite® DE: Magnesiumoxid der The HallStar Company

### Herstellung von Ethylen-Copolymerisaten:

### Beispiel 1 (ohne Nachdosierung):

Die Herstellung des Polymers erfolgte in einem 5 L Rührautoklaven. Hierzu wurden 2335 g einer Lösung bestehend aus 760 g *tert*-Butanol, 1390 g Vinylacetat (VA), 185 g SR 550 und 253,95 g einer Aktivatorlösung bestehend aus 3,95 g Perkadox 16 und 250 g Vinylacetat-*tert*.-Butanol Lösung (20 %-ig an Vinylacetat) nacheinander bei RT in den 5 L Reaktor eingezogen. Der Reaktor wurde fünfmal mit Stickstoff beaufschlagt und anschließend wurden 890 g Ethylen aufgedrückt. Die Temperatur wurde auf 54 °C erhöht, wobei sich ein Druck von ca. 380 bar einstellt. Der Druck wurde während der Polymerisation konstant bei 380 bar ± 10 bar durch wechselweises Aufdrücken von Ethylen und einer *tert-*Butanol/Vinylacetatlösung (60 %-ig an Vinylacetat) im Verhältnis 2:1 gehalten.

Nach einer Reaktionszeit von 10 h wurde die Zudosierung gestoppt und die Polymerlösung wurde langsam aus dem 5 L Reaktor in einen Abstoppautoklav gedrückt. Nach Entfernung des Lösungsmittels und der Restmonomere erhielt man 1528 g eines SR550-Ethylen-Vinylacetat-Copolymerisaten.

### Vergleichsbeispiel 1 (ohne Nachdosierung):

Die Herstellung des Polymers erfolgte in einem 5 L Rührautoklaven. Hierzu wurden 2267 g einer Lösung bestehend aus 730 g *tert*-Butanol, 1345 g Vinylacetat (VA), 192 g Methoxyethylmethacrylat und 253,95 g einer Aktivatorlösung bestehend aus 3,95 g Perkadox 16 und 250 g Vinylacetat-*tert*.-Butanol Lösung (20 % ig an Vinylacetat) nacheinander bei RT in den 5 L Reaktor eingezogen. Der Reaktor wurde fünfmal mit Stickstoff beaufschlagt und anschließend wurden 940 g Ethylen aufgedrückt. Die Temperatur wurde auf 54 °C erhöht, wobei sich ein Druck von ca. 380 bar einstellt. Der Druck wurde während der Polymerisation konstant bei 380 bar ± 10 bar durch wechselweises Aufdrücken von Ethylen und einer *tert*-Butanol/Vinylacetatlösung (60 %-ig an Vinylacetat) im Verhältnis 2:1 gehalten.

Nach einer Reaktionszeit von 10 h wurde die Zudosierung gestoppt und die Polymerlösung wurde langsam aus dem 5 L Reaktor in einen Abstoppautoklav gedrückt. Nach Entfernung des Lösungsmittels und der Restmonomere erhielt man 1234 g eines Methoxyethylmethacrylat-Ethylen-Vinylacetat-Copolymerisaten.
Ethylen = 30,4 Gew.-%, VA = 54,3 Gew.-%, Methoxyethylmethacrylat = 15,3 Gew.-%
ML(1+4) 100°C = -20°C,
Tg₁ = -20 °C, Tg₂: +2 °C

### Beispiele 2 bis 9, Vergleichsbeispiel 2 (mit Nachdosierung):

Die Herstellung der Polymere erfolgte in einem 5 L Rührautoklaven. Hierzu wurden die in Tabelle 1 in der Spalte "Vorlage" angegebenen Mengen an *tert*-Butanol, Vinylacetat (VA) und SR 550 sowie der entsprechende Initiator vorgelegt. Der Reaktor wurde zur Inertisierung fünfmal mit Stickstoff beaufschlagt und entspannt, anschließend wurde die in Tabelle 1 in Spalte "Ethylen" angegebene Menge an Ethylen aufgedrückt. Dann wurde die Reaktionslösung auf die in Spalte "Temperatur" angegebene Temperatur gebracht, wobei sich ein Druck von ca. 380 bar einstellte. Nach einer halben Stunde wurde begonnen, die in Spalte "Zudosierung" aufgeführte Mischung bestehend aus *tert*-Butanol, Vinylacetat und SR 550 über einen Zeitraum von 8,5 h zur Reaktionsmischung zu dosieren. Während der gesamten Reaktionszeit wurde der Druck durch Aufdrücken von Ethylen bei 380 ± 10 bar gehalten.

Nach einer Reaktionszeit von 10 h wurde die Ethylenzudosierung gestoppt und die Polymerlösung wurde langsam aus dem 5 L Reaktor in einen Abstoppautoklav gedrückt. Nach Entfernung des Lösungsmittels und der Restmonomere erhielt man ein SR550-Ethylen-Vinylacetat-Copolymerisat. Die analytischen Daten sind in Tabelle 2 gezeigt.

**Tabelle 1: Polymerisationsparameter bei der Herstellung der Ethylen-Copolymerisate.**

| Beispiel | Vorlage | Ethylen [g] | Initiator | Temp. [°C] | Zudosierung nach Reaktionsstart | Zudosierung [g/min] | Ausbeute [g] |
|---|---|---|---|---|---|---|---|
| 2 | 893 g t-Butanol | 1062 | 3,0 g | 61 | 122,2 g t-Butanol | 0,6 | 1439 |
| | 1338 g Vinylacetat | | VAZO 52® | | 83,8 g Vinylacetat | | |
| | 6 g SR550 | | | | 83,8 g SR 550 | | |
| 3 | 893 g t-Butanol | 1152 | 3,0 g | 61 | 125,3 g t-Butanol | 0,62 | 1114 |
| | 1147 g Vinylacetat | | VAZO 52® | | 188,0 g SR 550 | | |
| | 12 g SR550 | | | | | | |
| 4 | 893 g t-Butanol | 1130 | 3,0 g | 61 | 122,2 g t-Butanol | 0,6 | 1257 |
| | 1250 g Vinylacetat | | VAZ0 52® | | 32,8 g Vinylacetat | | |
| | 9 g SR550 | | | | 151 g SR 550 | | |
| 5 | 960 g t-Butanol | 960 | 3,95 g | 54 | 122,2 g t-Butanol | 0,6 | 1537 |
| | 1440 g Vinylacetat | | Perkadox 16® | | 4,8 g Vinylacetat | | |
| | 11 g SR550 | | | | 179 g SR 550 | | |
| 6 | 906 g t-Butanol | 905 | 3,95 g | 54 | 148,6 g t-Butanol | 0,83 | 1660 |
| | 1683 g Vinylacetat | | | | 78,0 g Vinylacetat | | |
| | 12 g SR550 | | Perkadox 16® | | 198 g SR 550 | | |
| 7 | 804 g t-Butanol | 905 | 2,5 g | 61 | 122,2 g t-Butanol | 0,6 | 1301 |
| | 1205 g Vinylacetat | | | | 23,3 g Vinylacetat | | |
| | 9,5 g SR552 | | VAZO 52® | | 160,5 g SR 552 | | |
| 8 | 980 g t-Butanol | 990 | 3,95 g | 54 | 183,6 g t-Butanol | 0,9 | 1648 |
| | 1420 g Vinylacetat | | | | 94,6 g Vinylacetat | | |
| | 11,0g Ethyltriglycolmethacrylat | | Perkadox 16® | | 179,0 g Ethyltriglycolmethacrylat | | |
| 9 | 893g t-Butanol | 1062 | 3,00 g | 61 | 81 g t-Butanol | 0,76 | 1677 |
| | 1338 g Vinylacetat | | | | 81 g Vinylacetat | | |
| | 9 g Bisomer® PPA6 | | VAZO 52® | | 151 g Bisomer®PPA6 | | |
| V2 | 980 g t-Butanol | 990 | 3,95 g | 54 | 183,6 g t-Butanol | 0,9 | 1084 |
| | 1420 g Vinylacetat | | | | 96,4g Vinylacetat | | |
| | 11,0 g Methoxyethylmethacrylat | | Perkadox 16® | | 179g Methoxyethylmethacrylat | | |

**Tabelle 2: Analytische Daten.**

| Beispiel | GPC | | | Tg [°C] | Zusammensetzung | | | ML (1+4) 100°C [MU] |
|---|---|---|---|---|---|---|---|---|
| | Mn [kg/mol] | Mw [kg/mol] | Mz [kg/mol] | | Ethylen [Gew.-%] | Vinylacetat [Gew.-%] | Monomer der allgemeinen Formel (I) [Gew.-%] | |
| V1 | 62 | 178 | 376 | -20/+2 | 30,4 | 54,3 | 15,3 Methoxyethylmethacrylat | 20 |
| 1 | 68 | 360 | 1071 | -22 | 31,4 | 57,2 | 11,4 SR 550 | 15 |
| 2 | 60 | 197 | 446 | -30 | 40,5 | 53,1 | 7,3 SR 550 | 14 |
| 3 | 58 | 167 | 353 | -36 | 39,1 | 43,6 | 17,3 SR 550 | <10 |
| 4 | 61 | 182 | 397 | -32 | 39,4 | 47,9 | 12,8 SR 550 | 10 |
| 5 | 65 | 239 | 583 | -31 | 35,3 | 52,5 | 12,2 SR 550 | 16 |
| 6 | 64 | 216 | 513 | -25 | 29,8 | 57,9 | 12,3 SR 550 | 11 |
| 7 | 64 | 193 | 414 | -35 | 41,5 | 45,5 | 13,0 SR 552 | 19 |
| 8 | 68 | 272 | 728 | -27 | 34,2 | 54,6 | 11,2 Ethyltriglycolmethacrylat | 20 |
| 9 | 71 | 249 | 600 | -29 | 39,6 | 51,5 | 8,9 Bisomer®PPA6 | 25 |
| V2 | 62 | 178 | 416 | -18 | 31,0 | 55,0 | 14,0 Methoxyethylmethacrylat | 19 |

Das Polymer von Beispiel 5 weist eine deutliche niedrigere Glastemperatur auf als ein Ethylen-Vinylacetat-Copolymer mit demselben Ethylengehalt, welches keine Monomere der Formel (I) enthält. Zum Beispiel hat Levapren 700, ein Ethylen-Vinylacetat Copolymer mit einem Ethylengehalt von 30 Gew.-% eine Glastemperatur von -15 °C. Die Vergleichsbeispiele 1 und 2 zeigen, dass Methacrylatmonomere, die nur eine einzelne alkylierte Ethylenglykoleinheit aufweisen nicht ausreichen, um eine signifikante Verringerung der Glastemperatur zu erzielen. Tatsächlich wird mit solchen Methacrylatmonomeren ein inhomogenes Produkt erhalten, bei welchem, wie das Vergleichsbeispiel V1 zeigt, in der DSC zwei Glastemperaturen zu beobachten sind und die mechanischen Eigenschaften generell schlechter ausfallen als bei homogenen Produkten.

Durch Zudosierung von Monomeren der allgemeinen Formel (I) nach Reaktionsstart kann eine noch niedrigere Glastemperatur erzielt werden, wie ein Vergleich der Glastemperaturen der Polymere von Beispiel 6 + 1 zeigt. Zwar kann mit einer solchen Verfahrensweise auch die Ausbildung der Inhomogenität bei Methacrylatmonomeren, die nur eine einzelne alkylierte Ethylenglykoleinheit aufweisen, unterdrückt werden, jedoch ist die Glastemperatur deutlich höher als bei Verwendung der erfindungsgemäßen Monomere der Formel (I).

### Herstellung der vulkanisierbaren Mischungen und Vulkanisate

Die Polymere wurden gemäß den in Tabelle 3 gezeigten Rezepturen in einem Innenmischer des Typs GK 1,5 E der Firma Harburg-Freudenberger hergestellt. Der Füllgrad betrug 70 %, die Temperatur 30 °C, die Drehzahl 40 rpm, der Stempeldruck 8 bar.

Polymer, Füllstoffe, Weichmacher und sonstige Bestandteile außer dem Peroxid wurden in den Mischer gefüllt, der Stempel geschlossen, 3 Minuten gemischt, dann der Stempel gelüftet und gefegt, der Stempel wieder geschlossen und die Mischung beim Erreichen von 110 °C Mischungstemperatur ausgeworfen. Das Perkadox® 14-40 B-PD wurde danach auf der Walze bei 30 °C eingemischt.

Die Vulkanisation erfolgte in der Presse bei 180 °C (10 min für 2 mm dicke Platten / Prüfkörper, 12 min für 6 mm dicke Platten / Prüfkörper).

Wie aus Tabelle 4 ersichtlich weisen die aus erfindungsgemäßen Polymeren hergestellten Vulkanisate vergleichbarer Ölquellung deutlich verringerte Glasübergangstemperaturen auf. Zudem ist die Wasserquellung vergleichbar oder sogar etwas geringer als bei den aus den Vergleichspolymeren hergestellten Vulkanisaten.

**Tabelle 3. Rezepturen der Mischversuche, Mengenangaben in phr**

| **Beispiel Nr.** | **VM1** | **VM2** | **VM3** | **M1** | **M2** | **M3** |
|---|---|---|---|---|---|---|
| Levapren 500 | 100 | | | | | |
| Levapren 600 | | 100 | | | | |
| Levapren 700 | | | 100 | | | |
| Copolymer aus Bsp. 3 | | | | 100 | | |
| Copolymer aus Bsp. 4 | | | | | 100 | |
| Copolymer aus Bsp. 6 | | | | | | 100 |
| Corax® N 550/30 | 45 | 45 | 45 | 45 | 45 | 45 |
| Maglite® DE | 3 | 3 | 3 | 3 | 3 | 3 |
| Rhenopren® EPS | 2 | 2 | 2 | 2 | 2 | 2 |
| Antilux® 110 | 1 | 1 | 1 | 1 | 1 | 1 |
| Stabaxol® P | 2 | 2 | 2 | 2 | 2 | 2 |
| Rhenofit® DDA | 1 | 1 | 1 | 1 | 1 | 1 |
| Rhenofit® TAC/S | 2 | 2 | 2 | 2 | 2 | 2 |
| Perkadox® 14-40B-PD | 6 | 6 | 6 | 6 | 8 | 6 |
| *Summe* | *162* | *162* | *162* | *162* | *164* | *162* |

**Tabelle 4. Ergebnisse der Mischversuche**

| **Beispiel-Nr.** | | **VM1** | **VM2** | **VM3** | **M1** | **M2** | **M3** |
|---|---|---|---|---|---|---|---|
| Ethylengehalt im Copolymerisat | Gew.-% | 50 | 40 | 30 | 39,1 | 39,4 | 29,8 |
| ML(1+4)100°C | MU | 44 | 45 | 44 | 19 | 23 | 27 |

| **Vulkanisation in der Presse bei 180 °C** | | | | | | | |
|---|---|---|---|---|---|---|---|
| Härte | ShA | 72 | 71 | 70 | 68 | 69 | 67 |
| Reißdehnung | % | 201 | 203 | 195 | 202 | 176 | 220 |
| Tg (DSC) | °C | -28 | -25 | -14 | -35 | -34 | -25 |

| **Lagerung 70 h / 150 °C IRM 903** | | | | | | | |
|---|---|---|---|---|---|---|---|
| Massenänderung | % | 64 | 43 | 25 | 48 | 42 | 25 |
| Volumenänderung | % | 82 | 56 | 33 | 64 | 55 | 33 |
| Härte | ShA | 53 | 53 | 56 | 47 | 53 | 51 |
| Reißdehnung | % | 97 | 123 | 159 | 120 | 125 | 187 |

| **Lagerung 168 h / 80 °C entionisiertes Wasser** | | | | | | | |
|---|---|---|---|---|---|---|---|
| Massenänderung | % | 6 | 8 | 10 | 6 | 4 | 10 |
| Volumenänderung | % | 7 | 8 | 11 | 6 | 4 | 10 |
| Härte | ShA | 70 | 69 | 68 | 67 | 69 | 63 |
| Reißdehnung | % | 205 | 194 | 187 | 218 | 195 | 230 |

## Patentansprüche

1. Ethylen-Copolymerisate enthaltend
i) 10 bis 69 Gew.-%, vorzugsweise 15 bis 59 Gew.-% copolymerisiertes Ethylen,
ii) 30 bis 84 Gew.-%, vorzugsweise 35 bis 80 Gew.-% copolymerisierte Einheiten mindestens eines Alkylcarbonsäurevinylesters und
iii) 1 bis 50 Gew.-% Wiederholungseinheiten abgeleitet von mindestens einem Monomer der allgemeinen Formel (I)
CH₂=C(R¹)(COO(R²O)ₙR³) (I)
worin
R¹ für Wasserstoff oder Methyl,
R² jeweils unabhängig voneinander für eine lineare oder verzweigte C₂ bis C₆-Alkylengruppe,
R³ für Wasserstoff, unsubstituiertes oder mit C₁-C₃ Alkyl ein oder mehrfach substituiertes Phenyl, eine lineare oder verzweigte C₁-C₈ Alkylgruppe oder -C(=O)R⁴,
R⁴ für Wasserstoff oder eine lineare oder verzweigte C₁-C₈ Alkylgruppe und
n für eine Zahl von 2 bis 30 steht,
wobei die Mengen bezogen sind auf die Summe der Monomeren i) bis iii).

2. Ethylen-Copolymerisate gemäß Anspruch 1, wobei die Alkylcarbonsäurevinylester sich von einer Alkylcarbonsäuregruppe mit 2 bis 13 C-Atomen, sowie von einer Vinylakoholgruppe mit 2 bis 5 C-Atomen ableiten, und vorzugsweise ausgewählt sind aus der Gruppe enthaltend Vinylacetat, Vinylpropionat, Vinylbutyrat, Vinyllaurat, 1-Methylvinylacetat und Vinylestern von α-verzweigten Monocarbonsäuren mit 5 bis 13 C-Atomen, besonders bevorzugt Vinylacetat und Vinylpropionat und meist bevorzugt Vinylacetat.

3. Ethylen-Copolymerisate gemäß Anspruch 1 oder 2, enthaltend 2 bis 40 Gew.-%, vorzugsweise 4 bis 25 Gew.-% und besonders bevorzugt 6 bis 20 Gew.-% an Wiederholungseinheiten abgeleitet von Monomeren der allgemeinen Formel (I), jeweils bezogen auf die Summe der Monomeren i) bis iii).

4. Ethylen-Copolymerisate gemäß einem der Ansprüche 1 bis 3, wobei die Reste R² unabhängig voneinander ausgewählt sind aus der Gruppe enthaltend Ethan-1,2-diyl, Propan-1,3-diyl, Propan-1,2-diyl, Butan-1,4-diyl, Butan-1,3-diyl, Pentan-1,3-diyl, Pentan-1,4-diyl, Pentan-1,5-diyl, 2-Methylbutan-1,4-diyl, vorzugsweise Ethan-1,2-diyl, Propan-1,3-diyl, Propan-1,2-diyl, und Butan-1,4-diyl, besonders bevorzugt Ethan-1,2-diyl und Propan-1,2-diyl.

5. Ethylen-Copolymerisate gemäß einem der Ansprüche 1 bis 4, wobei die Reste R³ ausgewählt sind aus der Gruppe bestehend aus H, CH₃, CH₂CH₃, CH₂CH₂CH₃, CH₂CH₂CH₂CH₃, CHO, COCH₃, COCH₂CH₃, COCH₂CH₂CH₃ und COCH₂CH₂CH₂CH₃, bevorzugt aus H, CH₃, CH₂CH₃ und COCH₃ und besonders bevorzugt aus CH₃, CH₂CH₃ und COCH₃.

6. Ethylen-Copolymerisate gemäß einem der Ansprüche 1 bis 5, **dadurch gekennzeichnet, dass** sie ein oder mehrere weitere copolymerisierte Monomere (iv) in einer Gesamtmenge von weniger als 25 Gew.-%, bevorzugt weniger als 20 Gew.-%, weiter bevorzugt weniger als 15 Gew.-%, noch weiter bevorzugt weniger als 10 Gew.-%, besonders bevorzugt weniger als 5 Gew.-% und ganz besonders bevorzugt weniger als 1 Gew.-% aufweisen, jeweils bezogen auf die Summe der Monomeren i) bis (iv).

7. Ethylen-Copolymerisate gemäß Anspruch 6, **dadurch gekennzeichnet, dass** die weiteren Monomere (iv) ausgewählt sind aus C₁-C₈-Alkylacrylaten, C₁-C₈-Alkylmethacrylaten, epoxygruppenhaltigen Acrylaten, epoxygruppenhaltigen Methacrylaten, Vinylketonen, vinylaromatischen Verbindungen, konjugierten Dienen, α-Monoolefinen, Vinylmonomeren mit einer Hydroxylgruppe, Chlorvinylacetat, Vinylidenfluorid, Hexafluorpropen, Vinylidenchlorid, Tetrafluorethylen, Tetrachlorethylen, Vinylchlorid, ungesättigten Amidmonomeren und Kohlenmonoxid, vorzugsweise aus Methylacrylat, Ethylacrylat, Propylacrylat, *n*-Butylacrylat, 2-Ethylhexylacrylat, *n*-Octylacrylat, Glycidylmethacrylat; Divinyladipat, Methylvinylketon, Ethylvinylketon, Styrol, α-Methylstyrol, Vinyltoluol, Butadien, Isopren, Propylen, 1-Buten, β-Hydroxyethylacrylat, 4-Hydroxybutylacrylat, 3-Cyanoethylacrylat, Acrylamid, N-Methylmethacrylamid und Kohlenmonoxid und ganz besonders bevorzugt aus Glycidylmethacrylat und Kohlenmonoxid.

8. Verfahren zur Herstellung von Ethylen-Copolymerisaten gemäß einem der Ansprüche 1 bis 7, in welchem Ethylen, Alkylcarbonsäurevinylester, Monomere der allgemeinen Formel (I) und ggf. ein oder mehrere weitere Monomere (iv) radikalisch polymerisiert werden.

9. Verfahren gemäß Anspruch 8, **dadurch gekennzeichnet**, nach dem Start der Polymerisationsreaktion Monomere der allgemeinen Formel (I) zudosiert werden.

10. Verfahren gemäß Ansprüchen 8 oder 9, **dadurch gekennzeichnet, dass** nach dem Start der Polymerisationsreaktion Monomere der allgemeinen Formel (I) als Mischung mit dem Vinylester und/oder einem Lösungsmittel zudosiert werden.

11. Vulkanisierbare Mischungen enthaltend Ethylen-Copolymerisate gemäß einem der Ansprüche 1 bis 7.

12. Verfahren zur Herstellung von Vulkanisaten aus vulkanisierbaren Mischungen gemäß Anspruch 11, indem diese mittels Peroxidgruppen enthaltenden Verbindungen, Diaminen, Polysäuren, Polysäureanhydriden und/oder energiereicher Strahlung vernetzt werden.

13. Vulkanisate erhältlich aus vulkanisierbaren Mischungen gemäß Anspruch 11 und/oder durch ein Verfahren gemäß Anspruch 12.

14. Verwendung von vulkanisierbaren Mischungen gemäß Anspruch 11 zur Herstellung von ungeschäumten oder geschäumten Formteilen, vorzugsweise Kabelleitlagen, Kabelmänteln, Dichtungen, Transportbändern, Faltenbälgen, Schläuchen, Zylinderkopfdeckeldichtungen und O-Ringen.

15. Verwendung von Ethylen-Copolymerisaten gemäß einem der Ansprüche 1 bis 7 als Blendkomponente in Kunststoffen oder Kautschuken, vorzugsweise PVC, Polyamid, Polyester und/oder HNBR.

16. Verwendung von Ethylen-Copolymerisaten gemäß einem der Ansprüche 1 bis 7 als nicht-flüchtiger Weichmacher und/oder Schlagzähmodifizierer in Kunststoffen, vorzugsweise PVC, Polyamid und/oder Polyester.

## Claims

1. Ethylene copolymers comprising
i)from 10 to 69% by weight, preferably from 15 to 59% by weight, of copolymerized ethylene,
ii) from 30 to 84% by weight, preferably from 35 to 80% by weight, of copolymerized units of at least one vinyl ester of an alkyl carboxylic acid and
iii) from 1 to 50% by weight of repeating units derived from at least one monomer of the general formula (I)
CH₂=C(R¹)(COO(R²O)ₙR³) (I)
in which
R¹ is hydrogen or methyl,
R² is respectively mutually independently a linear or branched C₂ to C₆-alkylene group,
R³ is hydrogen, unsubstituted phenyl or phenyl having one or more C₁-C₃ alkyl substituents, a linear or branched C₁-C₈ alkyl group or -C(=O)R⁴,
R⁴ is hydrogen or a linear or branched C₁-C₈ alkyl group and
n is a number from 2 to 30,
where the quantities are based on the entirety of the monomers i) to iii).

2. Ethylene copolymers according to Claim 1, where the vinyl esters of an alkyl carboxylic acid derive from an alkyl carboxylic acid group having from 2 to 13 C atoms and also from a vinyl alcohol group having from 2 to 5 C atoms, and are preferably selected from the group comprising vinyl acetate, vinyl propionate, vinyl butyrate, vinyl laurate, 1-methylvinyl acetate and vinyl esters of α-branched monocarboxylic acids having from 5 to 13 C atoms, particularly preferably vinyl acetate and vinyl propionate and most preferably vinyl acetate.

3. Ethylene copolymers according to Claim 1 or 2, comprising from 2 to 40% by weight, preferably from 4 to 25% by weight and particularly preferably from 6 to 20% by weight, of repeating units derived from monomers of the general formula (I), based in each case on the entirety of the monomers i) to iii).

4. Ethylene copolymers according to any of Claims 1 to 3, where the moieties R² are selected mutually independently from the group comprising ethane-1,2-diyl, propane-1,3-diyl, propane-1,2-diyl, butane-1,4-diyl, butane-1,3-diyl, pentane-1,3-diyl, pentane-1,4-diyl, pentane-1,5-diyl, 2-methylbutane-1,4-diyl, preferably ethane-1,2-diyl, propane-1,3-diyl, propane-1,2-diyl, and butane-1,4-diyl, particularly preferably ethane-1,2-diyl and propane-1,2-diyl.

5. Ethylene copolymers according to any of Claims 1 to 4, where the moieties R³ are selected from the group consisting of H, CH₃, CH₂CH₃, CH₂CH₂CH₃, CH₂CH₂CH₂CH₃, CHO, COCH₃, COCH₂CH₃, COCH₂CH₂CH₃ and COCH₂CH₂CH₂CH₃, preferably H, CH₃, CH₂CH₃ and COCH₃ and particularly preferably CH₃, CH₂CH₃ and COCH₃.

6. Ethylene copolymers according to any of Claims 1 to 5, **characterized in that** they comprise a total quantity of less than 25% by weight, preferably less than 20% by weight, more preferably less than 15% by weight, still more preferably less than 10% by weight, particularly preferably less than 5% by weight and very particularly preferably less than 1% by weight, based in each case on the entirety of the monomers i) to (iv), of one or more other copolymerized monomers (iv).

7. Ethylene copolymers according to Claim 6, **characterized in that** the other monomers (iv) are selected from C₁-C₈-alkyl acrylates, C₁-C₈-alkyl methacrylates, acrylates containing epoxy groups, methacrylates containing epoxy groups, vinyl ketones, vinylaromatic compounds, conjugated dienes, α-monoolefins, vinyl monomers having a hydroxy group, chlorovinyl acetate, vinylidene fluoride, hexafluoropropene, vinylidene chloride, tetrafluoroethylene, tetrachloroethylene, vinyl chloride, unsaturated amide monomers and carbon monoxide, preferably from methyl acrylate, ethyl acrylate, propyl acrylate, *n*-butyl acrylate, 2-ethylhexyl acrylate, *n*-octyl acrylate, glycidyl methacrylate; divinyl adipate, methyl vinyl ketone, ethyl vinyl ketone, styrene, α-methylstyrene, vinyltoluene, butadiene, isoprene, propylene, 1-butene, β-hydroxyethyl acrylate, 4-hydroxybutyl acrylate, 3-cyanoethyl acrylate, acrylamide, N-methylmethacrylamide and carbon monoxide and very particularly preferably from glycidyl methacrylate and carbon monoxide.

8. Process for the production of ethylene copolymers according to any of Claims 1 to 7, in which ethylene, vinyl esters of an alkyl carboxylic acid, monomers of the general formula (I) and optionally one or more other monomers (iv) are subjected to free-radical polymerization.

9. Process according to Claim 8, **characterized in that** after the polymerization reaction has been initiated monomers of the general formula (I) are added.

10. Process according to Claim 8 or 9, **characterized in that** after the polymerization reaction has been initiated monomers of the general formula (I) are added in the form of mixture with the vinyl ester and/or with a solvent.

11. Vulcanizable mixtures comprising ethylene copolymers according to any of Claims 1 to 7.

12. Process for the production of vulcanizates made of vulcanizable mixtures according to Claim 11, where these are crosslinked by means of diamines, polyacids, anhydrides of a polyacid, compounds comprising peroxide groups and/or high-energy radiation.

13. Vulcanizates obtainable from vulcanizable mixtures according to Claim 11 and/or via a process according to Claim 12.

14. Use of vulcanizable mixtures according to Claim 11 for the production of unfoamed or foamed mouldings, preferably cable conduction layers, cable sheathing, gaskets, transport belts, bellows, hoses, cylinder-head-cover gaskets and O-rings.

15. Use of ethylene copolymers according to any of Claims 1 to 7 as blend component in plastics or rubbers, preferably PVC, polyamide, polyester and/or HNBR.

16. Use of ethylene copolymers according to any of Claims 1 to 7 as non-volatile plasticizer and/or impact modifier in plastics, preferably PVC, polyamide and/or polyester.

## Revendications

1. Copolymérisats d'éthylène contenant
i) 10 à 69 % en poids, de préférence 15 à 59 % en poids d'éthylène copolymérisé,
ii) 30 à 84 % en poids, de préférence 35 à 80 % en poids de motifs copolymérisés d'au moins un ester vinylique d'acide alkylcarboxylique et
iii) 1 à 50 % en poids de motifs répétitifs issus d'au moins un monomère de formule générale (I)
CH₂=C(R¹)COO(R²O)ₙR³) (I)
dans laquelle
R¹ représente hydrogène ou méthyle,
R² représentent, à chaque fois indépendamment les uns des autres, un groupe C₂₋₆-alkylène linéaire ou ramifié,
R³ représente hydrogène, phényle non substitué ou substitué une ou plusieurs fois par C₁₋₃-alkyle, un groupe C₁₋₈-alkyle linéaire ou ramifié ou -C(=O)R⁴,
R⁴ représente hydrogène ou un groupe C₁₋₈-alkyle linéaire ou ramifié et
n représente un nombre de 2 à 30,
les quantités se rapportant à la somme des monomères i à iii).

2. Copolymérisats d'éthylène selon la revendication 1, les esters de vinyle d'acide alkylcarboxylique étant issus d'un groupe acide alkylcarboxylique comportant 2 à 13 atomes de C, ainsi que d'un groupe alcool vinylique comportant 2 à 5 atomes de C, et de préférence étant choisis dans le groupe contenant l'acétate de vinyle, le propionate de vinyle, le butyrate de vinyle, le laurate de vinyle, l'acétate de 1-méthylvinyle et des esters vinyliques d'acides monocarboxyliques ramifiés en α comportant 5 à 13 atomes de C, particulièrement préférablement l'acétate de vinyle et le propionate de vinyle et le plus préférablement l'acétate de vinyle.

3. Copolymérisats d'éthylène selon la revendication 1 ou 2, contenant 2 à 40 % en poids, de préférence 4 à 25 % en poids et particulièrement préférablement 6 à 20 % en poids de motifs répétitifs issus de monomères de formule générale (I), à chaque fois par rapport à la somme des monomères i) à iii).

4. Copolymérisats d'éthylène selon l'une quelconque des revendications 1 à 3, les radicaux R² étant choisis indépendamment les uns des autres dans le groupe contenant éthane-1,2-diyle, propane-1,3-diyle, propane-1,2-diyle, butane-1,4-diyle, butane-1,3-diyle, pentane-1,3-diyle, pentane-1,4-diyle, pentane-1,5-diyle, 2-méthylbutane-1,4-diyle, de préférence éthane-1,2-diyle, propane-1,3-diyle, propane-1,2-diyle et butane-1,4-diyle, particulièrement préférablement éthane-1,2-diyle et propane-1,2-diyle.

5. Copolymérisats d'éthylène selon l'une quelconque des revendications 1 à 4, les radicaux R³ étant choisis dans le groupe constitué par H, CH₃, CH₂CH₃, CH₂CH₂CH₃, CH₂CH₂CH₂CH₃, CHO, COCH₃, COCH₂CH₃, COCH₂CH₂CH₃ et COCH₂CH₂CH₂CH₃, préférablement parmi H, CH₃, CH₂CH₃ et COCH₃ et particulièrement préférablement parmi CH₃, CH₂CH₃ et COCH₃.

6. Copolymérisats d'éthylène selon l'une quelconque des revendications 1 à 5, **caractérisés en ce qu'**ils présentent un ou plusieurs monomères copolymérisés supplémentaires (iv) en une quantité totale inférieure à 25 % en poids, préférablement inférieure à 20 % en poids, plus préférablement inférieure à 15 % en poids encore plus préférablement inférieure à 10 % en poids, particulièrement préférablement inférieure à 5 % en poids et tout particulièrement préférablement inférieure à 1 % en poids, à chaque fois par rapport à la somme des monomères i) à (iv).

7. Copolymérisats d'éthylène selon la revendication 6, **caractérisés en ce que** les monomères supplémentaires (iv) sont choisis parmi les acrylates de C₁₋₈-alkyle, les méthacrylates de C₁₋₈-alkyle, les acrylates contenant des groupes époxy, des méthacrylates contenant des groupes époxy, des vinylcétones, des composés vinylaromatiques, des diènes conjugués, des α-monooléfines, des monomères vinyliques dotés d'un groupe hydroxyle, l'acétate de chlorovinyle, le fluorure de vinylidène, l'hexafluoropropène, le chlorure de vinylidène, le tétrafluoroéthylène, le tétrachloroéthylène, le chlorure de vinyle, des monomères de type amide insaturés et le monoxyde de carbone, de préférence parmi l'acrylate de méthyle, l'acrylate d'éthyle, l'acrylate de propyle, l'acrylate de n-butyle, l'acrylate de 2-éthylhexyle, l'acrylate de n-octyle, le méthacrylate de glycidyle ; l'adipate de divinyle, la méthylvinylcétone, l'éthylvinylcétone, le styrène, l'α-méthylstyrène, le vinyltoluène, le butadiène, l'isoprène, le propylène, le 1-butène, l'acrylate de β-hydroxyéthyle, l'acrylate de 4-hydroxybutyle, l'acrylate de 3-cyanoéthyle, l'acrylamide, le N-méthylméthacrylamide et le monoxyde de carbone et tout particulièrement préférablement parmi le méthacrylate de glycidyle et le monoxyde de carbone.

8. Procédé pour la préparation de copolymérisats d'éthylène selon l'une quelconque des revendications 1 à 7, dans lequel de l'éthylène, des esters de vinyle d'acides alkylcarboxyliques, des monomères de formule générale (I) et éventuellement un ou plusieurs monomères supplémentaires (iv) sont polymérisés par voie radicalaire.

9. Procédé selon la revendication 8, **caractérisé en ce qu'**après le début de la réaction de polymérisation, des monomères de formule générale (I) sont ajoutés.

10. Procédé selon la revendication 8 ou 9, **caractérisé en ce qu'**après le début de la réaction de polymérisation, des monomères de formule générale (I) sont ajoutés en mélange avec l'ester vinylique et/ou un solvant.

11. Mélanges vulcanisables contenant des copolymérisats d'éthylène selon l'une quelconque des revendications 1 à 7.

12. Procédé pour la préparation de vulcanisats à partir de mélanges vulcanisables selon la revendication 11, par le fait que ceux-ci sont réticulés au moyen de composés contenant des groupes peroxyde, de diamines, de polyacides, de polyanhydrides d'acides et/ou de rayonnement riche en énergie.

13. Vulcanisats pouvant être obtenus à partir de mélanges vulcanisables selon la revendication 11 et/ou par un procédé selon la revendication 12.

14. Utilisation de mélanges vulcanisables selon la revendication 11 pour la fabrication d'articles moulés non expansés ou expansés, de préférence de câblages, de gaines de câble, de joints, de bandes de transports, de soufflets, de tuyaux, de joints de couvercle de culasse et d'anneaux toriques.

15. Utilisation de copolymérisats d'éthylène selon l'une quelconque des revendications 1 à 7 en tant que composant de mélange dans des plastiques ou des caoutchoucs, de préférence un PVC, un polyamide, un polyester et/ou un HNBR.

16. Utilisation de copolymérisats d'éthylène selon l'une quelconque des revendications 1 à 7 en tant qu'assouplissant non volatil et/ou modificateur de résistance aux chocs dans des plastiques, de préférence un PVC, un polyamide et/ou un polyester.
